(19) Europäisches Patentamt / European Patent Office / Office européen des brevets

(11) **EP 3 111 534 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(21) Anmeldenummer: **15707277.8**

(22) Anmeldetag: **23.02.2015**

(51) Int Cl.:
***H02K 1/14*** *(2006.01)*

(86) Internationale Anmeldenummer:
**PCT/EP2015/000403**

(87) Internationale Veröffentlichungsnummer:
**WO 2015/128072 (03.09.2015 Gazette 2015/35)**

(54) **TRANSVERSALFLUSSMASCHINE**

TRANSVERSE FLUX MACHINE

MACHINE À FLUX TRAVERSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2014 DE 102014002627**

(43) Veröffentlichungstag der Anmeldung:
**04.01.2017 Patentblatt 2017/01**

(73) Patentinhaber: **SEW-EURODRIVE GmbH & Co. KG 76646 Bruchsal (DE)**

(72) Erfinder:
- **DREHER, Florian**
  **76689 Karlsdorf-Neuthard (DE)**
- **PARSPOUR, Nejila**
  **70839 Gerlingen (DE)**

(56) Entgegenhaltungen:
EP-A1- 0 334 901    EP-A1- 1 005 136
EP-A1- 2 493 054    EP-A2- 1 063 754
WO-A2-2008/098403    DE-A1- 3 705 089
DE-A1- 19 811 073

- DREHER F ET AL: "Reducing the cogging torque of PM Transverse Flux Machines by discrete skewing of a segmented stator", ELECTRICAL MACHINES (ICEM), 2012 XXTH INTERNATIONAL CONFERENCE ON, IEEE, 2. September 2012 (2012-09-02), Seiten 454-457, XP032464757, DOI: 10.1109/ICELMACH.2012.6349908 ISBN: 978-1-4673-0143-5
- N. PARSPOUR: "Novel Drive for Use in electric Vehicle", 2005 IEEE 61TH VEHICULAR TECHNOLOGY CONFERENCE, Bd. 5, 1. Juni 2005 (2005-06-01), Seiten 2930-2933, XP002757321,
- H. Weh: "Transversalflussmaschine" In: D. Schröder: "Elektrische Antriebe - Grundlagen, dritte Auflage", 1. Januar 2007 (2007-01-01), Springer, Berlin, XP002757322, ISBN: 978-3-540-72764-4 Seiten 391-409, das ganze Dokument

**Beschreibung**

Die Erfindung betrifft eine Elektromaschine.

Es ist allgemein bekannt, dass Elektromaschinen einen Stator und einen relativ zu diesem drehbar gelagerten Rotor mit Aktivteil aufweisen. Dabei werden mehrere magnetische Wechselfelder zu einem Drehfeld überlagert, so dass in Wechselwirkung mit einem Erregerfeld des Rotors eine Drehbewegung erzeugt wird.

Aus der Veröffentlichung von DREHER F ET AL: "Reducing the cogging torque of PM Transverse Flux Machines by discrete skewing of a segmented Stator" ELECTRICAL MACHINES (ICEM), 2012 XXTHINTERNATIONAL CONFERENCE ON, IEEE, 2. September 2012, Seiten 454 - 457, ISBN 978-1-4673-0143-5 ist eine Transversalflussmaschine als nächstliegender Stand der Technik bekannt.

Aus der Veröffentlichung N. PARSPOUR: "Novel Drive for Use in electrical Vehicle", 2005 IEEE 61TH VEHICULAR TECHNOLOGY CONFERENCE, Bd. 5, 1. Juni 2005, Seiten 2930 - 2933, ist ein neuartiger Antrieb für Elektrofahrzeuge bekannt.

Aus der WO 2008 / 098403 A2 ist eine elektrische Maschine bekannt.

Aus der EP 2 493 054 A1 ist eine mehrphasige Transversalflussmaschine bekannt.

Aus der EP 1 063 754 A2 ist ebenfalls eine Transversalflussmaschine bekannt.

Aus der EP 0 334 901 A1 ist eine Transversalflussmaschine in Sammleranordnung bekannt.

Aus der DE 198 11 073 A1 ist ein zylindrischer mehrphasiger Transversalflussfaktor bekannt.

Aus der EP 1 005 136 A1 ist eine ein- oder mehrphasige Transversalflussmaschine bekannt.

Aus der Veröffentlichung H. Weh: "Transversalflussmaschine " in D. Schröder: "Elektrische Antriebe - Grundlagen, dritte Auflage", 1. Januar 2007, Springer, Berlin, ISBN 978-3-540-72764-4, Seiten 391-409 ist eine Transversalflussmaschine bekannt.

Aus der DE 37 05 089 A1 ist eine Transversalflussmaschine in Sammleranordnung bekannt.

Der Erfindung liegt daher die Aufgabe zugrunde, Sättigungsverluste bei einer Elektromaschine zu vermeiden.

Erfindungsgemäß wird die Aufgabe bei der Elektromaschine nach den in Anspruch 1 angegebenen Merkmalen gelöst.

Wichtige Merkmale der Erfindung bei der Elektromaschine, insbesondere Transversalflussmaschine, sind, dass der Stator aus einem Stapel von einer Anzahl m von Unterstapeln zusammengesetzt ist, wobei die Unterstapel in Stapelrichtung aufeinander gestapelt angeordnet sind,

wobei jeder Unterstapel aus einer Anzahl k in Stapelrichtung aufeinander gestapelten Statorstrangsegmenten zusammengesetzt ist,

wobei jedes Statorstrangsegment zumindest ein oder zumindest zwei Statorsegmente und eine Statorwicklung, insbesondere Einzelwicklung, aufweist,

wobei jedes Statorsegment einen ringförmigen Statorsteg aufweist, an welchem Polschuhe angeformt sind, insbesondere welche sich nach radial innen erstrecken und/oder welche auf den Rotor zu sich erstrecken und/oder welche zwischen Rotor und ringförmigem Statorsteg angeordnet sind,

insbesondere wobei die Polschuhe gleichartig ausgeformt sind,

wobei die Orientierung des Stromes in den Wicklungen zweier in Stapelrichtung benachbarter Statorstrangsegmente eines jeweiligen Unterstapels entgegengesetzt ist, insbesondere also der Wickelsinn entgegengesetzt ist,

wobei jeweils zwei in Stapelrichtung benachbarte Statorstrangsegmente zueinander einen nichtverschwindenden Versatz in Umfangsrichtung aufweisen.

Von Vorteil ist dabei, dass ein hohes Drehmoment erzeugbar ist, dass der Streufluss minimal ist und trotzdem ein hohes Drehmoment erzeugbar ist.

Bei einer vorteilhaften Ausgestaltung ist das jeweilige Statorstrangsegment um einen Versatzwinkel ($\alpha_{U,n}$ $\alpha_{V,n}$ $\alpha_{W,n}$) in Umfangsrichtung verdreht gegenüber dem ersten Statorstrangsegment des ersten Unterstapels, insbesondere also gegenüber dem axial vordersten Statorstrangsegment,

wobei der Versatzwinkel ($\alpha_{U,n}$ $\alpha_{V,n}$ $\alpha_{W,n}$) gemäß folgender Formeln bestimmt ist:

$$\alpha_{U,n} = \frac{1}{p}\left[180° \cdot \left(\frac{(n-1)}{k \cdot m} - f(n)\right)\right]$$

$$\alpha_{V,n} = \frac{1}{p}\left[180° \cdot \left(\frac{(n-1)}{k \cdot m} - f(n)\right) + 120°\right]$$

$$\alpha_{W,n} = \frac{1}{p}\left[180° \cdot \left(\frac{(n-1)}{k \cdot m} + f(n) - 1\right) + 240°\right]$$

wobei U, V, W die Unterstapel durchnummeriert, insbesondere also der jeweiligen Phase zugeordnet ist,

wobei der Parameter n die Statorstrangsegmente eines jeweiligen Unterstapels (U, V, W) durchnummeriert und dabei jeweils, also für jeden Unterstapel, die Werte von 1 bis k annimmt,

wobei n, m, k natürliche Zahlen sind,

insbesondere wobei der Parameter m die Strangzahl, insbesondere also die Anzahl der Phasen (U, V, W), beschreibt und größer als zwei ist,

wobei der Parameter k die Anzahl der Statorstrangsegmente pro Unterstapel, insbesondere also pro Phase, beschreibt insbesondere wobei m= 3 ist,

wobei

$$Es\ sei\ f(\mathrm{n}) = \begin{cases} 1 & \text{für } n\ gerade \\ 0 & \text{für } n\ ungerade \end{cases}$$

gilt. Von Vorteil ist dabei, dass bei dieser Versatzwinkelwahl ein Optimum bezüglich kleinem Streufluss und großem Drehmoment erreichbar ist.

Bei einer vorteilhaften Ausgestaltung ist das jeweilige Statorstrangsegment um einen Versatzwinkel ($\alpha_{U,n}$ $\alpha_{V,n}$ $\alpha_{W,n}$) in Umfangsrichtung verdreht gegenüber dem ersten Statorstrangsegment des ersten Unterstapels, insbesondere also gegenüber dem axial vordersten Statorstrangsegment,

wobei der negative Versatzwinkel ($-\alpha_{U,n}$ $-\alpha_{V,n}$ $-\alpha_{W,n}$) gemäß folgender Formeln bestimmt ist:

$$\alpha_{U,n} = \frac{1}{p}\left[180° \cdot \left(\frac{(n-1)}{k \cdot m} - f(\mathrm{n})\right)\right]$$

$$\alpha_{V,n} = \frac{1}{p}\left[180° \cdot \left(\frac{(n-1)}{k \cdot m} - f(\mathrm{n})\right) + 120°\right]$$

$$\alpha_{W,n} = \frac{1}{p}\left[180° \cdot \left(\frac{(n-1)}{k \cdot m} + f(\mathrm{n}) - 1\right) + 240°\right]$$

wobei U, V, W die Unterstapel durchnummeriert, insbesondere also der jeweiligen Phase zugeordnet ist,

wobei der Parameter n die Statorstrangsegmente eines jeweiligen Unterstapels (U, V, W) durchnummeriert und dabei jeweils, also für jeden Unterstapel, die Werte von 1 bis k annimmt,

wobei n, m, k natürliche Zahlen sind,

insbesondere wobei der Parameter m die Strangzahl, insbesondere also die Anzahl der Phasen (U, V, W), beschreibt und größer als zwei ist,

wobei der Parameter k die Anzahl der Statorstrangsegmente pro Unterstapel, insbesondere also pro Phase, beschreibt insbesondere wobei m= 3 ist,

wobei

$$Es\ sei\ f(n) = \begin{cases} 1 & \text{für } n \text{ gerade} \\ 0 & \text{für } n \text{ ungerade} \end{cases}$$

gilt. Von Vorteil ist dabei, dass auch die an einer Spiegelebene gespiegelte Maschine vorteilhaft ausführbar ist.

Bei einer vorteilhaften Ausgestaltung weist die Anzahl k der Statorstrangsegmente pro Unterstapel den Wert 2 auf. Von Vorteil ist dabei, dass einer Phase mehr als nur ein Statorstrangsegment zuordenbar ist und somit ein höheres Drehmoment erzeugbar ist.

Bei einer vorteilhaften Ausgestaltung weist die Polpaarzahl p, insbesondere jedes Statorstrangsegments, eine natürliche Zahl ist und einen Wert zwischen 5 und 21 auf, insbesondere den Wert 10. Von Vorteil ist dabei, dass eine geringes Polrasten erreichbar ist.

Bei einer vorteilhaften Ausgestaltung berühren die in axialer Richtung, also Stapelrichtung, direkt benachbarten Statorstrangsegmente sich jeweils. Von Vorteil ist dabei, dass ein möglichst kompakter Motor herstellbar ist.

Bei einer vorteilhaften Ausgestaltung weist jedes Statorsegment einen ringförmigen Statorsteg auf, an welchem Polschuhe angeformt sind, insbesondere welche sich orthogonal zum Steg, also nach radial innen, erstrecken und/oder welche auf den Rotor zu sich erstrecken und/oder welche zwischen Rotor und ringförmigem Statorsteg angeordnet sind, insbesondere wobei die Polschuhe gleichartig ausgeformt sind,

wobei die axiale Breite des Polschuhs mit zunehmendem Radialabstand abnimmt,

wobei der zugehörige Verlauf zwischen einem ersten und einem zweiten Verlauf angeordnet ist,

wobei der erste Verlauf eine lineare Funktion des Radialabstandes ist, insbesondere wobei der zum ersten Verlauf gehörige Polrücken eine ebene Fläche ist,

wobei der zweite Verlauf eine Kreisfunktion, insbesondere Kreisabschnittsfunktion, ist, insbesondere wobei der zum zweiten Verlauf gehörige Polrücken eine Zylinderabschnittsfläche ist. Von Vorteil ist dabei, dass zwar der erste Verlauf einfach zu fertigen wäre, jedoch wird dadurch das Risiko bewirkt, dass bei Feldstärkewerten, die noch nicht zur Sättigung der luftspaltseitigen Oberfläche des Polschuhs führen, eine zumindest teilweise Sättigung des Polschuhs erreicht wird. Denn der lineare Übergang ist nicht bauchig oder konvex. Somit müssen die Feldlinien durch eine Verengung auf ihrem Weg von der luftspaltseitigen Oberfläche des Polschuhs zum Statorsteg hindurch und bewirken dann bei entsprechender Feldstärke Sättigung in diesem verengten Bereich.

Durch die bauchige Ausformung wird die Verengung erweitert und somit die Sättigung vermieden.

Allerdings ist vorteiligerweise die bauchige Ausformung weniger bauchig als der zweite Verlauf. Denn bei Überschreiten der bauchigen Form des zweiten Verlaufs wird der für die Statorwicklung zur Verfügung stehende Wickelraum vermindert und die Leistung der Elektromaschine reduziert, also kein kompakter Aufbau möglich.

Denn die Erfindung bietet eine kompakte Lösung, also eine hohe Antriebsleistung und ein hohes Drehmoment pro Bauvolumen der Elektromaschine.

Die Erfindung lehrt also, dass sozusagen die Bauchigkeit vorhanden sein soll, jedoch unterhalb des durch den zweiten Verlauf beschriebenen Grenzverlaufs.

Dabei ist die Umlenkung der Feldlinien von der luftspaltseitigen Seite des Polschuhs, welche in axialer Richtung weiter ausgedehnt ist als in Umfangsrichtung, zum Statorsteg hin, wobei die Übergangsfläche vom Polschuh in den ringförmigen Statorsteg in Umfangsrichtung weiter ausgedehnt ist als in axialer Richtung.

Die erfindungsgemäße Polschuhform, insbesondere Formverlauf des Polschuhrückens, ermöglicht eine im Wesentlichen konstante Flussdichte auf der luftspaltseiteigen Polschuhfläche. Hierdurch sind die Regelungseigenschaften verbessert und ein hohes Drehmoment erreichbar bei möglichst kompakter Bauweise.

Weiterer Vorteil ist auch, dass die mechanische Stabilität verbessert wird und somit auch die Geräuschentwicklung vermindert und die Schwingungsneigung ebenfalls vermindert wird.

Bei der Erfindung ist vorteiligerweise kein magnetisches Drehfeld notwendig.

Bei einer vorteilhaften Ausgestaltung ist der Polschuh eines, insbesondere des ersten, Statorsegments an seiner vom anderen Statorsegment des Strangsegments abgewandten Seite eben ausgeführt, insbesondere zur Ermöglichung eines möglichst engen und berührenden Aufbau des Stapels der Strangsegmente. Von Vorteil ist dabei, dass die Strangsegmente dicht aneinander stapelbar sind, also ein kompakter Aufbau ermöglicht ist.

Bei einer vorteilhaften Ausgestaltung ist der zugehörige Verlauf der axialen Breite als Funktion des Radialabstandes aus zwei, nicht zueinander parallelen Abschnitten zusammengesetzt, die jeweils eine lineare Funktion des Radialabstandes sind,

insbesondere also der Polrücken aus zwei, nicht zueinander parallelen, ebenen Flächenstücken zusammengesetzt ist. Von Vorteil ist dabei, dass eine einfache Fertigung ausführbar ist.

Bei einer alternativen vorteilhaften Ausgestaltung ist der zugehörige Verlauf der axialen Breite als Funktion des Radialabstandes aus einem bauchigen und/oder konvexen Abschnitt und einem konkaven Abschnitt zusammengesetzt, wobei der konkave Abschnitt eine mindestens fünfmal kürzere Bogenlänge aufweist als der andere Abschnitt.

Von Vorteil ist dabei, dass die Gefahr von Kantenbrüchen reduziert ist und keine Einstiche oder dergleichen notwendig sind. Zur Fertigung der Radien sind entsprechende spanende Herstellverfahren oder Sinterverfahren verwendbar.

Bei einer vorteilhaften Ausgestaltung weist die luftspaltseitige Oberfläche des Polschuhs einen im Wesentlichen gleichgroßen oder höchstens um 20 % unterschiedlichen Flächenwert auf im Vergleich zur Übergangsfläche zum Statorsteg hin. Von Vorteil ist dabei, dass die Feldlinien keiner Verengung ausgesetzt sind und somit keine Sättigung eintritt.

Bei einer vorteilhaften Ausgestaltung weist der Polschuh einen Polrücken auf,

insbesondere wobei der Polrücken zumindest teilweise zur Statorwicklung und/oder zumindest teilweise zum anderen Statorsegment hin gewandt ist,

wobei der Polrücken die zum Rotor hin zugewandte, luftspaltseitige Fläche des Polschuhs mit dem Statorsteg, insbesondere mit der Statorstegoberfläche, verbindet,

wobei der Polrücken bauchig ausgeführt ist oder aus zwei, nicht zueinander parallelen, ebenen Flächenstücken zusammengesetzt ist. Von Vorteil ist dabei, dass die Gefahr von Kantenbrüchen reduziert ist.

Bei einer vorteilhaften Ausgestaltung ist der Polschuh derart geformt, dass im Wesentlichen kein Teilbereich des Polschuhs in Sättigung geht, solange der Oberflächenbereich der luftspaltseitigen, insbesondere also der zum Rotor hin gewandten, Seitenfläche des Polschuhs noch nicht in Sättigung geht. Von Vorteil ist dabei, dass keine Verengung für die Feldlinien auftritt und somit der Wirkungsgrad der Elektromaschine möglichst hoch ist.

Bei einer vorteilhaften Ausgestaltung weist der Polschuh eine mit zunehmendem Radialabstand zunehmende Breite in Umfangsrichtung auf,

insbesondere wobei mit zunehmendem Radialabstand die Zunahme der Breite in Umfangsrichtung im Wesentlichen in dem Maße, insbesondere umgekehrt proportional, verläuft wie die axiale Breite abnimmt. Von Vorteil ist dabei, dass die Feldlinien von der in axialer Richtung breiten luftspaltseitigen Polschuhfläche in die zum Stator hin gewandte Übergangsfläche des Polschuhs, welche in Umfangsrichtung breit ist, umlenkbar sind, ohne dass die Feldlinien durch eine Verengung müssen, der Wickelraum für die Statorwicklung reduziert wird und ohne dass der Luftspalt zwischen den Statorsegmenten eines selben Strangsegments verringert wird.

Bei einer vorteilhaften Ausgestaltung ist der Polschuh symmetrisch zu einer Symmetrieebene ausgeformt, wobei die Symmetrieebene durch den Schwerpunkt des Polschuhs geht und von der vom Schwerpunkt ausgehenden, radialen Richtung und von der axialen Richtung aufgespannt wird. Bei einer alternativen vorteilhaften Ausgestaltung ist der Polschuh symmetrisch zu einer Symmetrieebene ausgeformt, wobei die Symmetrieebene durch den Schwerpunkt des Polschuhs geht und die Normalenrichtung Tangentialrichtung am Schwerpunkt ist. Von Vorteil ist dabei, dass die Statorsegmente eines Strangsegments gleichartig ausführbar sind und somit nicht zwei Teile sondern nur ein Teil im Lager vorrätig gehalten werden muss.

Bei einer vorteilhaften Ausgestaltung ist eine Kante des Polschuhs verbreitert ausgeführt. Von Vorteil ist dabei, dass eine Reduzierung der Gefahr eines Kantenbruchs erreichbar ist.

Bei einer vorteilhaften Ausgestaltung weicht mit zunehmendem Radialabstand der Flächenwert der Schnittfläche des Polschuhs mit einer ersten Fläche im Wesentlichen dem Flächenwert der luftspaltseitigen, insbesondere also der zum Rotor hin gewandten, Seitenfläche des Polschuhs gleicht oder zumindest um weniger als 10% oder 20% ab,

- wobei die erste Fläche eine Tangentialebene ist, die zur Rotorwellenachse den jeweiligen Radialabstand aufweist und/oder die zur Rotorwellenachse parallel ausgerichtet ist und/oder die den Radialabstand aufweist und/oder die senkrecht zur Symmetrieebene ausgerichtet ist und/oder deren Normalenrichtung die Rotorwellenachse mit dem Schwerpunkt des Polschuhs verbindet

- oder wobei die erste Fläche eine Zylindermantelfläche ist, die zur Rotorwellenachse den jeweiligen Radialabstand aufweist und/oder die parallel zur Rotorwellenachse ausgerichtet ist.

Von Vorteil ist dabei, dass eine Sättigung des Materials des Polschuhs vermeidbar ist, solange die luftspaltseitige Fläche des Polschuhs beziehungsweise die entsprechend oberflächennahen Bereiche noch nicht in Sättigung übergegangen ist.

Bei einer vorteilhaften Ausgestaltung ist der Stapel in einem Gehäuseteil aufgenommen,

insbesondere wobei das Gehäuseteil einen axial verlaufenden Kabelkanal aufweist, insbesondere eine axial verlaufende Vertiefung an seiner dem Stapel zugewandten Fläche, insbesondere Innenfläche.

insbesondere wobei das Gehäuseteil kraftschlüssig mit dem Stapel verbunden ist,

insbesondere wobei das Gehäuseteil thermisch aufgeschrumpft ist auf den Stapel. Von Vorteil ist dabei, dass eine feste Verbindung in einfacher Weise herstellbar ist.

Bei einer vorteilhaften Ausgestaltung weist jedes Statorsegment zwei radial verlaufende, in Umfangsrichtung voneinander mit halbem Polschuhabstand beabstandete Vertiefungen, insbesondere Schlitze, auf,

insbesondere so dass beim Zusammenfügen zweier Statorsegmente zu einem Strangsegment die Schlitze in Deckung bringbar sind und zur Bildung eines Durchlasses für die Zuleitung und/oder Ableitung der jeweiligen Statorwicklung. Von Vorteil ist dabei, dass zwei gleichartige Statorsegmente zu einem Strangsegment zusammenfügbar sind und dabei die Schlitze in Deckung bringbar sind. Denn die Statorsegmente werden bei dem Zusammenfügen gegeneinander verdreht, damit ein jeweiliger Polschuh des ersten Statorsegments in Umfangsrichtung zwischen Polschuhe des zweiten Statorsegments im gleichen Radialabstandsbereich positioniert wird.

Bei einer vorteilhaften Ausgestaltung ist das Statorsegment aus gepresstem oder gesintertem Eisenpulver gefertigt. Von Vorteil ist dabei, dass eine einfache und kostengünstige einstückige Herstellung des Statorsegments ermöglicht ist.

Wichtige Merkmale bei dem Verfahren zum Herstellen einer Elektromaschine sind, dass die Schlitze bei der Herstellung des Stapels von einer Fertigungsmaschine zum Ausrichten, insbesondere zum Einstellen des relativen Verdrehwinkels, der Strangsegmente zueinander detektiert und/oder verwendet werden. Von Vorteil ist dabei, dass eine besonders einfache Herstellung ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

In der Figur 1 ist ein Statorsegment 1 eines erfindungsgemäßen Elektromotors in Schrägansicht gezeigt.

In der Figur 2 ist ein weiteres gleichartiges Statorsegment 1 des erfindungsgemäßen Elektromotors in Schrägansicht gezeigt, wobei eine Statorwicklung 20 als Ringwicklung eingelegt ist radial zwischen die Polschuhe und das Statorjoch 6.

In der Figur 3 ist ein Statorstrangsegment des erfindungsgemäßen Elektromotors in Schrägansicht gezeigt, wobei das Statorstrangsegment durch Zusammenfügen der Statorsegmente 1 der Figur 1 und der Figur 2 erzeugt ist.

In der Figur 4 ist das Statorsegment nach Figur 1 mit nach radial innen gerichteten, in Umfangsrichtung regelmäßig voneinander beabstandeten Polschuhen gezeigt, wobei ein vereinfacht dargestellter Polschuh vergrößert dargestellt ist.

In der Figur 5 ist ein Gehäuseteil 52 gezeigt, in welchem ein Stapel von Statorstrangsegmenten nach Figur 3 eingefügt ist, wobei ein axial verlaufender Kabelkanal 50 im Gehäuseteil 52 angeordnet ist.

In der Figur 6 ist ein vergrößerter Ausschnitt der Figur 5 gezeigt.

In der Figur 7 ist ein angeschnittenes Statorsegment 1 gezeigt, wobei ein Polschuh die Schnittfläche 70 aufweist.

In der Figur 8 ist die Schnittfläche 70 des Polschuhs aus Figur 7 dargestellt, wobei statt des vereinfachten, aus linearen Stücken zusammengesetzten Oberflächenverlaufs des Polschuhrückens andere Verläufe (80, 81, 82) dargestellt sind.

In der Figur 9 ist ein weiterer Verlauf 90 gezeigt, wobei Kanten gerundet ausgeführt sind.

In der Figur 10 ist ein Statorstrangsegment explodiert dargestellt.

In der Figur 11 ist der Stapel von Statorstrangsegmenten eines weiteren erfindungsgemäßen Elektromotors gezeigt, wobei benachbarte Statorstrangsegmente einen Versatz in Umfangsrichtung zueinander aufweisen.

In der Figur 12 ist eine Schnittansicht durch einen Abschnitt zweier benachbarter Statorstrangsegmente gezeigt, wobei verdeutlicht wird, dass die Stromrichtungen in der jeweiligen Wicklung 20 entgegengesetzt gerichtet ist.

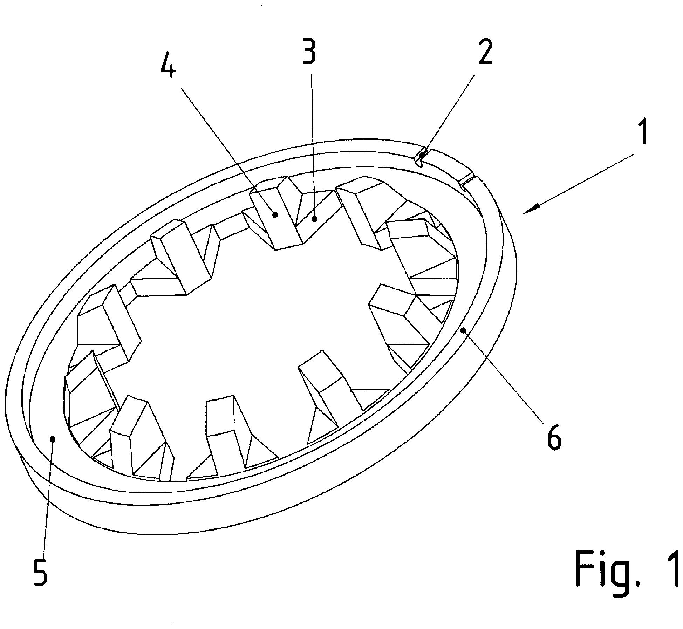

Wie in Figur 1 gezeigt, weist das Statorsegment 1 nach radial innen gerichtete, also zum nicht dargestellten Rotor hin gerichtete Polschuhe auf, die in Umfangsrichtung voneinander regelmäßig beabstandet sind.

Dabei sind die Polschuhe von einem ringförmigen Statorsteg 5 gehalten, der an seinem radial äußeren Endbereich ein axial, also in Rotorwellenachsrichtung, hervor ragenden Statorjoch 6 aufweist.

Die nach radial innengerichtete Fläche 4 des Polschuhs, also die zum Luftspalt zwischen Stator und Rotor hin gewandte Seite des Polschuhs ist eben oder gekrümmt, also mit einem Radius, welcher dem Radius der Statorinnenbohrung entspricht, ausgeführt.

Das am Rotor vorgesehene und zur Fläche 4 hin gewandte Aktivteil des Rotors ist beispielsweise mit Dauermagneten ausführbar, welche in Umfangsrichtung voneinander regelmäßig beabstandet sind, wobei die Magnetisierungsrichtung in Umfangsrichtung nächstbenachbarter Dauermagnete zueinander entgegengesetzt ausgerichtet ist.

Statt der Dauermagnete sind auch entsprechend angeordnete Elektromagnete mit Erregerwicklung vorsehbar. Weiter alternativ ist als Aktivteil auch ein Kurzschlusskäfig oder ein Reluktanzläufer einsetzbar.

Das Aktivteil, insbesondere die Dauermagnete oder Elektromagnete, ist im Wesentlichen axial ähnlich oder gleich weit ausgedehnt wie die Polschuhe. Somit ist ein hoher Wirkungsgrad erreichbar.

Von der Fläche 4 ausgehend weist der Übergangsbereich zum Statorsteg 6 eine seitliche Verbreiterung auf, welche sich in und entgegen der Umfangsrichtung erstreckt. Dabei ist die in Umfangsrichtung vorgesehene Breite der Verbreiterung mit zunehmendem Radialabstand größer.

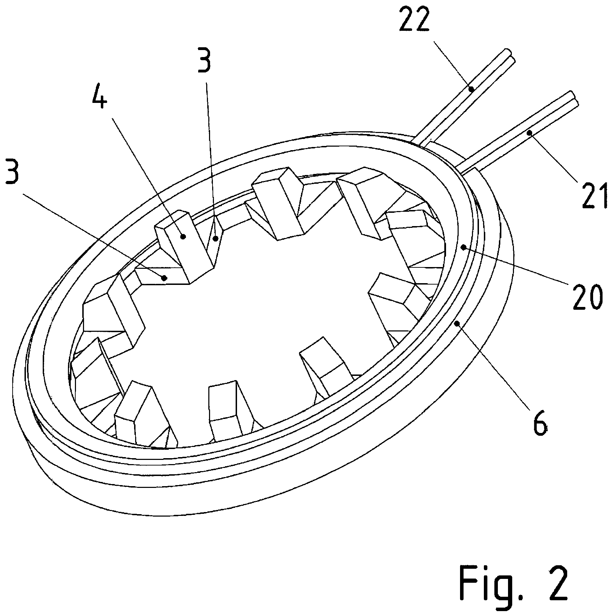

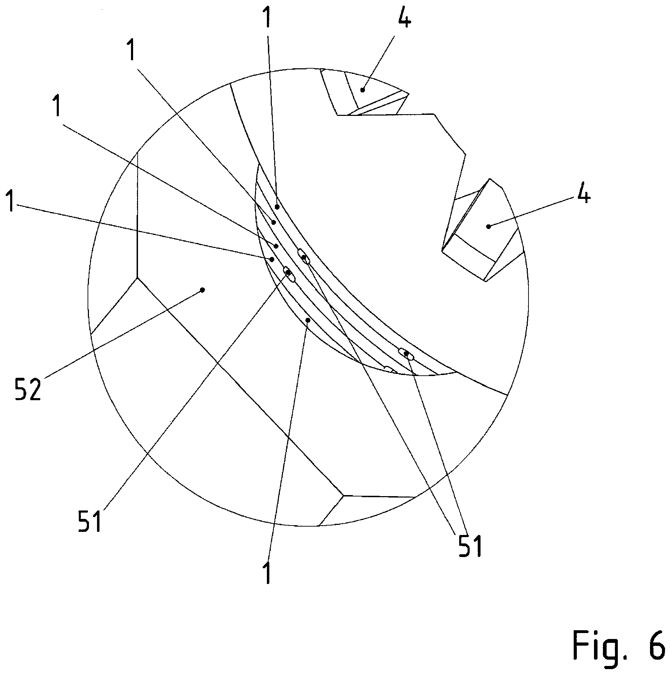

Der Polschuhrücken 42 ist bauchig ausgeführt, wobei zur vereinfachten Darstellung in den Figuren 1, 2, 3, 4, 5, 6, 7 zur Darstellung der bauchigen Form zwei Planflächenabschnitte verwendet sind.

Die seitliche Verbreiterung 3 und der bauchige Verlauf des Polschuhrückens 42 sind aufeinander abgestimmt und zwar derart, dass das an den Flächen 4 eintretende magnetische Feld in den Statorsteg eingeleitet wird, ohne dass Feldlinien im Polschuh konzentriert werden. Der Polschuh weist also eines derartige Ausformung auf, dass zumindest im Wesentlichen kein Teilbereich des Polschuhs in Sättigung geht, solange nicht Sättigung im Oberflächenbereich der Fläche 4 eintritt.

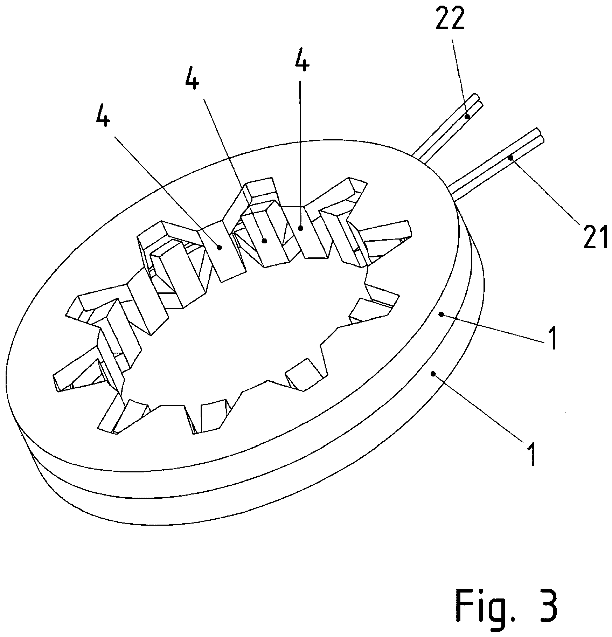

Solange also an der Fläche 4 die magnetische Feldstärke unter dem für Eintreten von Sättigung kritischen Wert bleibt, tritt auch keine Sättigung im Polschuh auf. Der Polschuh weist also genügend viel, die Feldlinien durchleitendes Material auf. Dabei ist allerdings die Polschuhform derart gewählt, dass möglichst viel Wickelraumbereich für die Statorwicklung 20 verbleibt. Außerdem verbleibt auch ein genügend großer Luftspalt zu den Polschuhen des weiteren Statorsegments 1, welches gemäß Figur 3 zusammen mit dem ersten Statorsegment 1 ein Statorstrangsegment bildet.

Wichtig ist hierbei auch, dass die Fläche 4 sich axial derart weit erstreckt, dass sie im Wesentlichen den vom Statorstrangsegment überdeckten axialen Bereich überdeckt. Somit ist eine maximale Ausnutzung gewährleistet.

Da die Fläche 4 weiter in axialer Richtung als in Umfangsrichtung ausgedehnt ist, werden die Feldlinien mittels des Polschuhs zum Übergang zum Statorsteg 5 hin umgelenkt auf eine gleich große Fläche, die aber in Umfangsrichtung weiter ausgedehnt ist als in axialer Richtung. Die Feldlinien werden - Groß gesprochen - sozusagen schraubenförmig umgelenkt. Bei dieser Umlenkung ist aber auf dem Weg der Feldlinien stets genügend Material vorhanden, so dass im Wesentlichen nirgends im Polschuh Sättigung eintritt.

Der Polschuh weist also eine derartige Ausformung aus, dass von radial innen nach radial außen der Polrücken im Wesentlichen in dem Maße axial schmäler wird, in welchem sich der Polschuh seitlich, also in Umfangsrichtung, verbreitert. Dabei wird die exakte Form des Polschuhs derart gewählt, dass eine einfache Fertigung erreichbar ist.

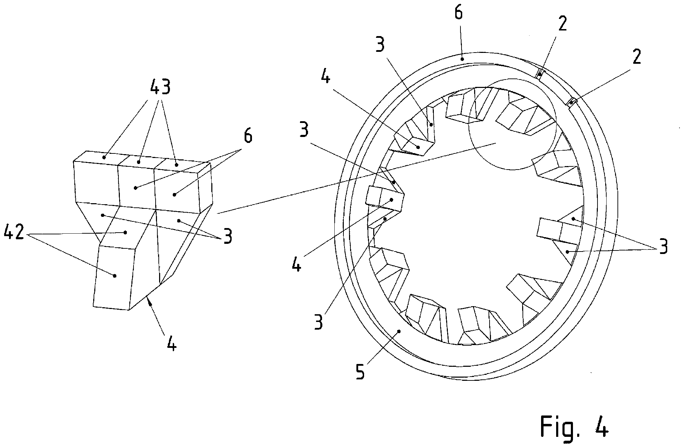

In Figur 4 ist eine Übergangsfläche 42 gezeigt, in welche die Feldlinien von der Fläche 4 ausgehend umgeleitet werden. Die Übergangsfläche 42 ist zwar parallel zur Fläche 4 ausgebildet aber in Umfangsrichtung weiter ausgedehnt als in axialer Richtung, wohingegen die Fläche 4 in axialer Richtung weiter ausgedehnt ist als in Umfangsrichtung.

Das Statorsegment 1 ist aus einem magnetisierbaren Material, wie beispielsweise gepresstes oder gesintertes Eisenpulver (SMC), ein- oder mehrstückig ausgeführt.

Wie in Figur 3 gezeigt, sind zwei gleichgeformte Statorsegmente 1 zusammengefügt, wobei eine als Ringwicklung ausgeführte Statorwicklung 20 im zwischen den Statorstegen 5 der Statorsegmente angeordneten Zwischenraum eingelegt ist. Dabei sind die Statorjoche 6 der beiden Statorsegmente 1 zueinander gewandt und berühren sich, so dass das magnetische Feld im Wesentlichen ungestört übertreten kann von einem ersten Statorsegment 1 zu einem zweiten Statorsegment 1.

Da die beiden Statorsegmente 1 zueinander verdreht sind um den halben Umfangswinkel, welcher zwischen zwei in Umfangsrichtung nächstbenachbarten Polschuhen eines jeweiligen Statorsegments 1 vorhanden ist. Somit wechseln sich in Umfangsrichtung die Polschuhe der beiden Statorsegmente 1 ab. In Umfangsrichtung folgt also auf jeden Polschuh eines ersten Statorsegments 1 ein Polschuh des anderen Statorsegments 1.

Jedes Statorsegment 1 weist zwei in Umfangsrichtung voneinander beabstandete Vertiefungen 2 auf. Die Vertiefungen 2 sind vorzugsweise als im Statorjoch 6 radial sich erstreckende Schlitze ausgeführt, insbesondere sind die Schlitze an der dem anderen Statorsegment 1 des Strangsegments zugewandten axialen Stirnseite angeordnet.

Somit kommen die Schlitze der beiden Statorsegmente 1 des Strangsegments bei geeignet gewähltem Verdrehwinkel in Deckung und bilden dann zusammen eine Ausnehmung 51, insbesondere Durchlass für die Ableitung 22 und Zuleitung 21 der Statorwicklung 20.

Da die beiden Schlitze 2 in Umfangsrichtung voneinander um wiederum den halben Umfangswinkel beabstandet sind, welcher zwischen zwei in Umfangsrichtung nächstbenachbarten Polschuhen eines jeweiligen Statorsegments 1 vorhanden ist, kommen die beiden Schlitze 2 eines ersten Statorsegments mit den beiden Schlitzen 2 des anderen Statorsegments 1 in Deckung.

Die Schlitze sind von radial außen am Stapel sichtbar, solange der Stapel noch nicht in das Gehäuseteil eingeführt ist. Somit sind diese Schlitze von einer Fertigungsmaschine mit Bilderfassung erkennbar und zur Einstellung des relativen Verdrehwinkels zwischen den Strangsegmenten verschiedener Phasen, also zwischen den mit verschiedenen Phasenströmen bestromten Strangsegmenten, verwendbar.

Die Phasenströme sind beispielsweise Strangströme eines Drehstromsystems.

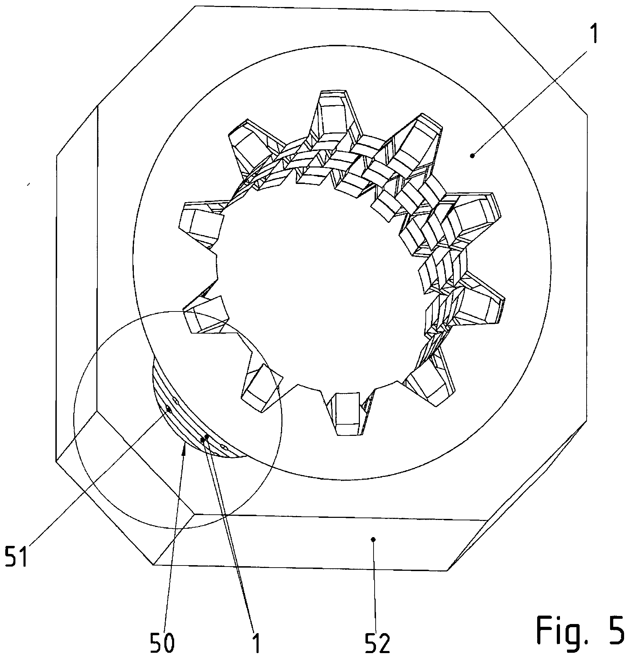

Wie in Figur 5 gezeigt, sind zur Bildung der Elektromaschine mehrere, jeweils gleichartig aus zwei Statorsegmenten und einer Statorwicklung zusammengesetzte Strangsegmente in axialer Richtung hintereinander gestapelt, wobei die Strangsegmente gegeneinander verdreht sind, wenn sie mit verschiedenen Phasenströmen (U, V, W) bestromt werden.

Zu gleichen Phasenströmen gehörende Strangsegmente sind nicht oder weniger stark verdreht als wenn sie mit verschiedenen Phasenströmen (U, V, W) bestromt werden oder nur um ganzzahlige Vielfache des obengenannten Umfangswinkels zwischen den Polschuhen eines jeweiligen Statorsegments 1.

Die in axialer Richtung aufeinander gestapelt angeordneten Strangsegmente berühren sich, wobei eine dünne elektrisch isolierende Schicht zwischen ihnen eingebracht sein kann. Diese dünne elektrisch isolierende Schicht verbessert den Wirkungsgrad der Maschine. Der Stapel ist in einer Ausnehmung eines den Stapel aufnehmenden Gehäuseteils 52 aufgenommen, wobei das Gehäuseteil 52 vorzugsweise aufgeschrumpft und/oder klebend verbunden ist, insbesondere kraftschlüssig verbunden ist. Hierzu wird das Gehäuseteil 52 vor dem Verbinden auf eine höhere Temperatur, insbesondere eine um mindestens 50 Kelvin oder mindestens 100 Kelvin gebracht als der Stapel. Somit ist das Einfügen des Stapels in das Gehäuseteil 52 in einfacher Weise ermöglicht und nach Ausgleich der Temperatur eine kraftschlüssige Verbindung erreicht.

Das Gehäuseteil 52 ist vorzugsweise aus Metall, wie beispielsweise Aluminium, gefertigt.

Die jeweiligen Ableitungen 22 und Zuleitungen 21 werden in dem axial verlaufenden Kabelkanal 50 herausgeführt. Der Kabelkanal 50 ist vorzugsweise als Nut in die Innenwandung der Aufnahmeöffnung zur Aufnahme des Stapels eingearbeitet.

Die Statorsegmente 1 eines jeweiligen Strangsegments berühren sich nur an ihren axialen Stirnseiten im Bereich der axial aufeinander zu hervor ragenden Statorjoche 6. In den übrigen Oberflächenbereichen ist ein Mindestluftspalt zwischen den beiden Statorsegments 1 eingehalten. Statt Luft ist die Statorwicklung 20 und/oder Vergussmasse und/oder Isolationspapier vorgesehen.

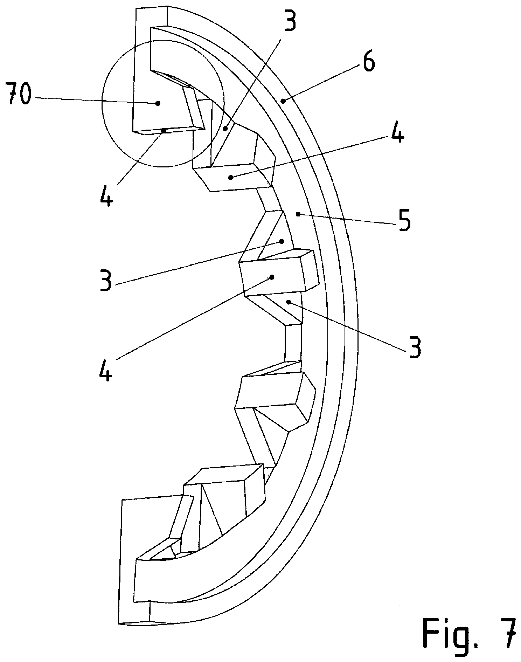

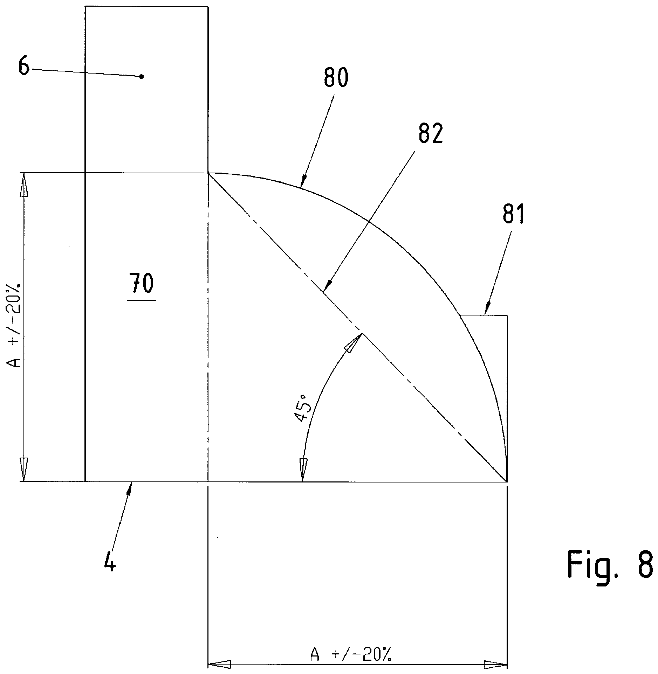

Die Schnittfläche 70 aus Figur 7 ist in Figur 8 erläutert. In Figur 8 ist der Verlauf der Oberfläche des Polschuhrückens 42 erläutert. Hierbei sind je nach gewünschtem Fertigungsaufwand verschiedene Verläufe wählbar.

Der lineare, also ebene Verlauf 82 ist besonders einfach zu fertigen, bewirkt aber schon bei unkritischen Feldstärken eine Sättigung von Teilbereichen des Polschuhs, auch wenn die Fläche 4 noch nicht in Sättigung geht.

Bei dem bauchigen Verlauf 80 folgt der geschnittene Polschuhrücken 42 einem Kreisabschnitt.

Die erfindungsgemäßen Verläufe der Polschuhrücken 42 weisen einen zwischen den Verläufen 80 und 82 liegenden Verlauf auf. Somit ist der erfindungsgemäße Polschuhrücken 42 im Wesentlichen bauchig ausgeführt und die Abnahme des Polschuhrückens bei zunehmendem Radialabstand wird von einer Zunahme der seitlichen Verbreiterung in Umfangsrichtung begleitet.

Da die zwischen Polschuhrücken 42 und Fläche 4 liegende Kante die Gefahr eines Kantenbruchs beinhaltet, ist eine Verdickung gemäß dem Verlauf 81 oder eine Verrundung in diesem Bereich vorteilig.

Der Mittelpunkt des zum Verlauf 80 gehörenden Kreismittelpunkts liegt auf der Ecke des zum Verlauf 82 gehörenden gleichschenkligen rechtwinkligen Dreiecks.

Der Polschuhrücken 42, welcher zum Verlauf 80 gehört, ist also einem Zylinderwandabschnitt entsprechend ausgeführt. Denn in Figur 8 ist nur der mittig angeordnete Schnitt gezeigt ist.

Der Polschuhrücken 42, welcher zum Verlauf 82 gehört, ist also einem ebenen Flächenabschnitt entsprechend ausgeführt. Denn in Figur 8 ist nur der mittig angeordnete Schnitt gezeigt ist.

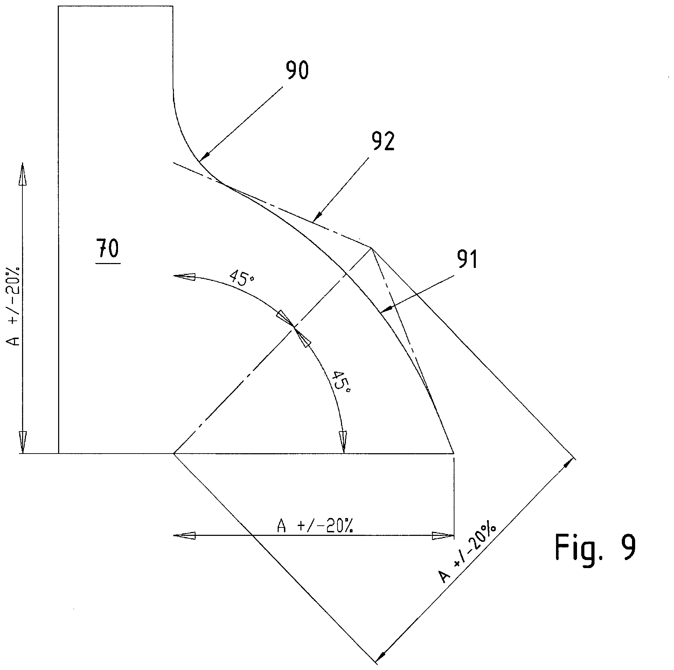

Besonders vorteilhaft ist der in Figur 9 gezeigte Verlauf des Schnitts des Polschuhrückens. Hierbei ist sind beim Verlauf 92 zwei lineare Abschnitte zusammengesetzt, die einen Winkel zwischen 0° und 90°, insbesondere zwischen 15° und 50°, aufweisen. Dabei ist im Schnitt gemäß Figur 9 die Länge der beiden linearen Abschnitte gleich oder um weniger als 30% unterschiedlich.

Da Verrundungen die Gefahr von Kantenbruch reduzieren, ist in Figur 9 ein solcher Verlauf gezeigt. Dieser weist einen ersten Kreisabschnitt 90 und einen zweiten Kreisabschnitt 91 auf, wobei ein stetiger glatter und differenzierbarer Übergang zwischen den Kreisabschnitten 90 und 91 vorhanden ist. Die Länge, also Bogenlänge, des Kreisabschnitts 90 beträgt zwischen 10% und 50%, insbesondere zwischen 15% und 35%, der Länge des Kreisabschnitts 91.

Der Polschuhrücken 42 verläuft entsprechend geschwungen, da in Figur 9 nur der mittig angeordnete Schnitt gezeigt ist.

Zwischen dem jeweiligen Statorsegment 1 und der Statorwicklung 20 ist zur Verbesserung des Isolierabstandes Isolierpapier angeordnet. Alternativ wird die Wicklung mit isolierendem Kunststoff umspritzt.

Der Kreisbogenabschnitt beim Verlauf 90 verläuft konkav; der Kreisbogenabschnitt beim Verlauf 91 verläuft konvex. Der Verlauf 92 ist vereinfacht ausgeführt, also der Polrücken 42 aus zwei ebenen Flächen zusammengesetzt.

Die erfindungsgemäße Elektromaschine ist also auch als Klauenpol-Transversalflussmaschine bezeichenbar.

Bei einem weiteren erfindungsgemäßen Ausführungsbeispiel ist ein Temperatursensor im Bereich der Statorwicklung 20 angeordnet, dessen Anschlussleitungen ebenfalls durch den Durchlass 51 geführt ist.

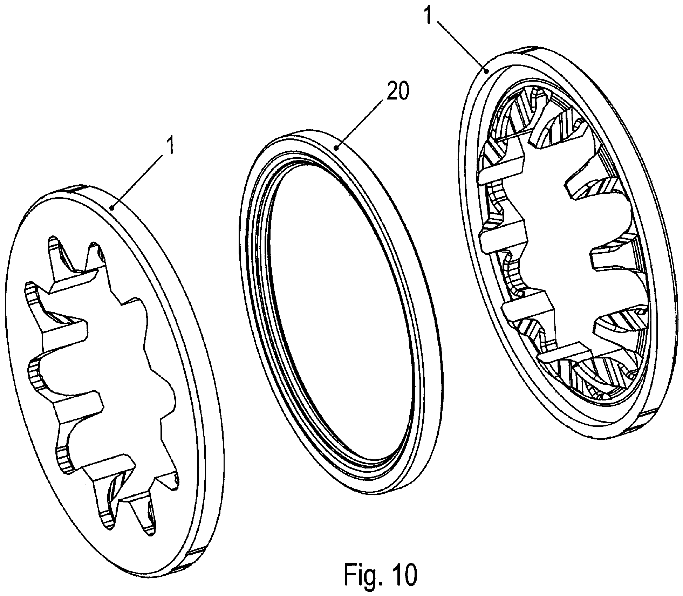

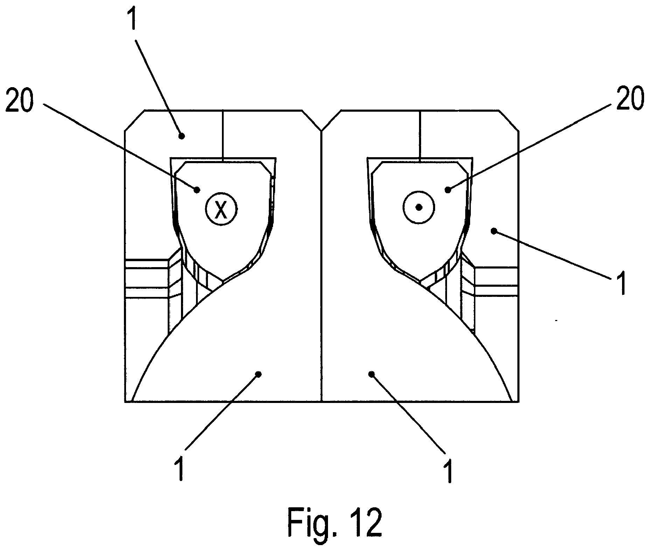

Wie in den Figuren 10 bis 12 gezeigt, werden zur Bildung des Stators des Motors Statorstrangsegmente gestapelt angeordnet. Dabei ist die Orientierung des Stroms in den jeweiligen Wicklungen 20 zweier jeweils zueinander benachbarter Statorstrangsegmente entgegengesetzt.

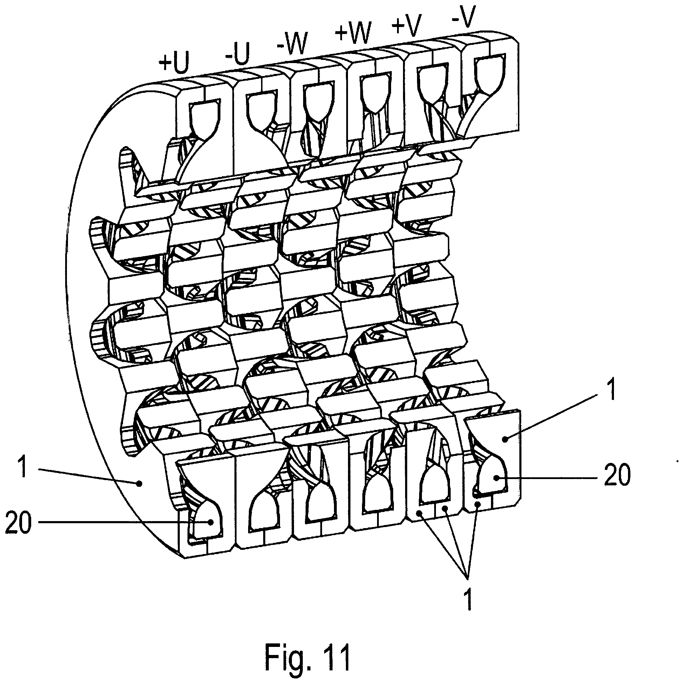

Für eine Maschine mit drei Strängen, wobei jeder Strang einer Phase der Drehstromversorgung zugeordnet ist, zeigt Figur 11 drei Paare von Statorstrangsegmenten.

Zwar ist jedes Statorstrangsegment gleichartig ausgeführt, aber zwei jeweils axial zueinander benachbarte Statorstrangsegmente weisen eine unterschiedliche Stromorientierung auf. In einfacher Weise ist das durch einen umgekehrten Wickelsinn der jeweiligen Wicklung 20 ausführbar oder durch für die jeweilige Wicklung 20 vertauschte Anschlüsse an die Netzphase.

Das erste Statorstrangsegment des Stapels ist an die Phase U angeschlossen, ebenso das zweite, dessen Wicklungssinn aber umgekehrt ist. Das nächste Statorstrangsegment ist mit der Phase W verbunden, weist aber denselben Wicklungssinn wie das zweite Statorstrangsegment auf. Das vierte Statorstrangsegment ist ebenfalls mit der Phase W verbunden, aber mit zum dritten Statorstrangsegment umgekehrten Wicklungssinn. Das fünfte Statorsegment ist mit der Phase V verbunden und weist denselben Wicklungssinn auf wie das vierte Statorstrangsegment. Das fünfte Statorstrangsegment ist ebenfalls mit der Phase V verbunden, weist aber umgekehrten Wicklungssinn auf wie die fünfte Statorstrangsegment. Somit ist die Anordnung in Kurzform durch die Schreibweise (+U, -U, -W, +W, +V, -V) beschreibbar.

Der Versatzwinkel jedes Statorstrangsegments ist relativ zum ersten Statorstrangsegment gemäß folgender Formeln bestimmbar:

$$\alpha_{U,n} = \frac{1}{p}\left[180° \cdot \left(\frac{(n-1)}{k \cdot m} - f(n)\right)\right]$$

$$\alpha_{V,n} = \frac{1}{p}\left[180° \cdot \left(\frac{(n-1)}{k \cdot m} - f(n)\right) + 120°\right]$$

$$\alpha_{W,n} = \frac{1}{p}\left[180° \cdot \left(\frac{(n-1)}{k \cdot m} + f(n) - 1\right) + 240°\right]$$

Eine Fertigungstoleranz von 3 % ist hierbei möglichst zu unterschreiten, um die vorteilhafte Wirkung der reduzierten Streuung und des großen Drehmoments beizubehalten. Je genauer der gemäß Formel bestimmte Wert eingehalten wird, desto vorteilhafter die Wirkung. Der Winkel $\alpha_{U,n}$ ist auf die beiden Statorstrangsegmente bezogen, welche aus der Phase U versorgt sind, also auf die Beiden ersten Statorstrangsegmente. Der Winkel $\alpha_{V,n}$ ist auf die beiden letzten Statorstrangsegmente bezogen. Diese sind aus der Phase V versorgt. Die beiden axial mittleren auf$\alpha_{W,n}$

Der Parameter k beschreibt die Anzahl der Statorstrangsegmente pro Phase und hat somit den Wert 2 für Figur 11. Die Laufvariable n nummeriert die Statorstrangsegmente einer jeweiligen Phase. Für Figur 11 nimmt diese Variable also den Wert 1 oder 2 an.

Der Parameter m beschreibt die Strangzahl und hat somit den Wert 3 bei Drehstromversorgung.

Die Polpaarzahl p ist eine natürliche Zahl und hat somit den Wert 10 für Figur 11, da jedes Statorsegment 1 zehn Klauen, also Polschuhe, am Umfang aufweist und somit jedes Statorstrangsegment gemäß Figur 10 insgesamt zwanzig Klauen am Umfang und somit zehn Polpaare aufweist.

Darüber hinaus gilt:

$$Es\ sei\ f(n) = \begin{cases} 1 & \text{für } n\ gerade \\ 0 & \text{für } n\ ungerade \end{cases}$$

Der Parameter k beschreibt die Anzahl der Statorstrangsegmente pro Phase und hat somit den Wert 2 für Figur 11. Die Laufvariable n nummeriert die Statorstrangsegmente einer jeweiligen Phase. Für Figur 11 nimmt diese Variable also den Wert 1 oder 2 an.

Der Parameter m beschreibt die Strangzahl und hat somit den Wert 3 bei Drehstromversorgung.

Die Polpaarzahl p ist eine natürliche Zahl und hat somit den Wert 10 für Figur 11, da jedes Statorsegment 1 zehn Klauen am Umfang aufweist und somit jedes Statorstrangsegment gemäß Figur 10 insgesamt zwanzig Klauen am Umfang und somit zehn Polpaare aufweist.

Darüber hinaus gilt:

$$Es\ sei\ f(\mathrm{n}) = \begin{cases} 1 & \text{für } n \text{ gerade} \\ 0 & \text{für } n \text{ ungerade} \end{cases}$$

Bei weiteren erfindungsgemäßen Ausführungsbeispielen sind aber auch andere Polpaarzahlen p und andere Anzahlen k von Statorstrangsegmenten pro Phase vorgesehen. Somit durchläuft die Laufvariable n den Wertebereich der natürlichen Zahlen von 1 bis k.

Bei weiteren erfindungsgemäßen Ausführungsbeispielen ist auch die zur Figur 11 gespiegelte Ausführung vorteilhaft. Hierbei enthält die Spiegelebene die Rotorwellenachse des Motors und schneidet eine der Klauen, also Polschuh, des axial äußersten Statorsegments 1 in Umfangsrichtung mittig. Im Vergleich zum ungespiegelten Motor kehren sich also die Wicklungssinne der Wicklungen um und die Versatzwinkel in Umfangsrichtung ebenfalls.

Bei weiteren erfindungsgemäßen Ausführungsbeispielen ist auch eine andere Stranganzahl m vorsehbar. Somit weist der Stapel dann m Unterstapel auf, die in Stapelrichtung aufeinander gestapelt sind. Jeder Unterstapel weist k Statorstrangsegmente auf, die einen Versatzwinkel zum ersten Statorstrangsegment gemäß obiger Formeln aufweisen. Jeder Unterstapel ist aus einer jeweiligen Phase versorgt. Der Wicklungssinn beim Übergang vom letzten Statorstrangsegment einer Phase zum ersten Statorstrangsegment der in Stapelrichtung nächsten Phase ist gleich. Die Phasenfolge ist derart gewählt, dass vom Stator ein Drehfeld erzeugt wird, also der Rotor in Drehbewegung gesetzt wird, vorzugsweise unter Erzeugung eines möglichst großen Drehmoments.

**Bezugszeichenliste**

| | |
|---|---|
| 1 | Statorsegment |
| 2 | Vertiefung, insbesondere Schlitz |
| 3 | Seitenfläche, insbesondere Verbreiterung in Umfangsrichtung |
| 4 | Polschuhfläche, insbesondere luftspaltseitige Polschuhfläche, also dem Aktivteil des Rotors zugewandte Fläche des Polschuhs |
| 5 | Statorsteg |
| 6 | Statorjoch |
| 20 | Statorwicklung |
| 21 | Zuleitung |
| 22 | Ableitung |
| 42 | Polschuhrücken, insbesondere bauchig ausgeformt |
| 43 | Übergangsfläche |
| 50 | Kabelkanal |
| 51 | Ausnehmung, insbesondere Durchlass |
| 52 | Gehäuseteil |
| 70 | Schnittfläche |
| 80 | maximal bauchiger Verlauf des Polschuhrückens 42 |
| 81 | Kantenverdickung |
| 82 | minimal bauchiger Verlauf des Polschuhrückens 42, insbesondere linearer, ebener oder gerader Verlauf |
| 90 | konkaver kreisabschnittsförmiger Verlauf |
| 91 | konvexer kreisabschnittsförmiger Verlauf |
| 92 | vereinfachter Verlauf, zusammengesetzt aus zwei ebenen Flächen |

**Patentansprüche**

1. Elektromaschine, insbesondere Transversalflussmaschine,
   wobei der Stator aus einem Stapel von einer Anzahl m von Unterstapeln (U, V, W) zusammengesetzt ist, wobei die Unterstapel (U, V, W) in Stapelrichtung aufeinander gestapelt angeordnet sind,

wobei jeder Unterstapel (U, V, W) aus einer Anzahl k in Stapelrichtung aufeinander gestapelten Statorstrangsegmenten zusammengesetzt ist,

wobei jedes Statorstrangsegment zumindest ein oder zumindest zwei Statorsegmente und eine Statorwicklung, insbesondere Einzelwicklung, aufweist,

wobei jedes Statorsegment einen ringförmigen Statorsteg aufweist, an welchem Polschuhe angeformt sind, insbesondere welche sich nach radial innen erstrecken und/oder welche auf den Rotor zu sich erstrecken und/oder welche zwischen Rotor und ringförmigem Statorsteg angeordnet sind,

insbesondere wobei die Polschuhe gleichartig ausgeformt sind,

wobei die Orientierung des Stromes in den Wicklungen zweier in Stapelrichtung benachbarter Statorstrangsegmente eines jeweiligen Unterstapels entgegengesetzt ist, insbesondere also der Wickelsinn entgegengesetzt ist,

wobei jeweils zwei in Stapelrichtung benachbarte Statorstrangsegmente zueinander einen nichtverschwindenden Versatz in Umfangsrichtung aufweisen,

insbesondere wobei die Versatzwinkel der Statorstrangsegmente in axialer Richtung streng monoton zunehmen oder wobei die Versatzwinkel der Statorstrangsegmente in axialer Richtung streng monoton abnehmen,

wobei das jeweilige Statorstrangsegment um einen Versatzwinkel ($\alpha_{U,n}$ $\alpha_{V,n}$ $\alpha_{W,n}$) in Umfangsrichtung verdreht ist gegenüber dem ersten Statorstrangsegment des ersten Unterstapels, insbesondere also gegenüber dem axial vordersten Statorstrangsegment,

wobei der jeweilige negative Versatzwinkel ($-\alpha_{U,n}$ $-\alpha_{V,n}$ $-\alpha_{W,n}$) weniger als 3%, abweicht von dem gemäß

$$\alpha_{U,n} = \frac{1}{p}\left[180° \cdot \left(\frac{(n-1)}{k \cdot m} - f(n)\right)\right]$$

beziehungsweise

$$\alpha_{V,n} = \frac{1}{p}\left[180° \cdot \left(\frac{(n-1)}{k \cdot m} - f(n)\right) + 120°\right]$$

beziehungsweise

$$\alpha_{W,n} = \frac{1}{p}\left[180° \cdot \left(\frac{(n-1)}{k \cdot m} + f(n) - 1\right) + 240°\right]$$

beziehungsweise

bestimmten Wert,

wobei U, V, W die Unterstapel durchnummeriert, insbesondere also der jeweiligen Phase zugeordnet ist,

wobei der Parameter n die Statorstrangsegmente eines jeweiligen Unterstapels (U, V, W) durchnummeriert und dabei jeweils, also für jeden Unterstapel, die Werte von 1 bis k annimmt,

wobei n, m, k natürliche Zahlen sind,

insbesondere wobei der Parameter m die Strangzahl, insbesondere also die Anzahl der Phasen (U, V, W), beschreibt und größer als zwei ist,

wobei der Parameter k die Anzahl der Statorstrangsegmente pro Unterstapel, insbesondere also pro Phase, beschreibt

insbesondere wobei m= 3 ist,

wobei

$$Es\ sei\ f(\mathrm{n}) = \begin{cases} 1 & \text{für } n\ \text{gerade} \\ 0 & \text{für } n\ \text{ungerade} \end{cases}$$

gilt,

**dadurch gekennzeichnet, dass**

mit zunehmendem Radialabstand der Flächenwert der Schnittfläche des Polschuhs mit einer ersten Fläche dem Flächenwert der luftspaltseitigen, also der zum Rotor hin gewandten, Seitenfläche des Polschuhs zumindest um weniger als 20% abweicht,

- wobei die erste Fläche eine Tangentialebene ist, die zur Rotorwellenachse den jeweiligen Radialabstand aufweist und/oder die zur Rotorwellenachse parallel ausgerichtet ist und/oder die den Radialabstand aufweist und/oder die senkrecht zur Symmetrieebene ausgerichtet ist und/ deren Normalenrichtung die Rotorwellenachse mit dem Schwerpunkt des Polschuhs verbindet

- oder wobei die erste Fläche eine Zylindermantelfläche ist, die zur Rotorwellenachse den jeweiligen Radialabstand aufweist und/oder die parallel zur Rotorwellenachse ausgerichtet ist.

2. Elektromaschine nach Anspruch 1,
**dadurch gekennzeichnet, dass**
die Anzahl k der Statorstrangsegmente pro Unterstapel den Wert 2 aufweist, und/oder dass
die Polpaarzahl p, insbesondere jedes Statorstrangsegments, eine natürliche Zahl ist und einen Wert zwischen 5 und 21 aufweist, insbesondere den Wert 10,
und/oder dass
die in axialer Richtung, also Stapelrichtung, direkt benachbarten Statorstrangsegmente sich jeweils berühren.

3. Elektromaschine nach mindestens einem der vorangegangenen Ansprüche,
**dadurch gekennzeichnet, dass**
die axiale Breite des Polschuhs mit zunehmendem Radialabstand abnimmt,
wobei der zugehörige Verlauf zwischen einem ersten und einem zweiten Verlauf angeordnet ist,
wobei der erste Verlauf eine lineare Funktion des Radialabstandes ist, insbesondere wobei der zum ersten Verlauf gehörige Polrücken eine ebene Fläche ist,
wobei der zweite Verlauf eine Kreisfunktion, insbesondere Kreisabschnittsfunktion, ist, insbesondere wobei der zum zweiten Verlauf gehörige Polrücken eine Zylinderabschnittsfläche ist.

4. Elektromaschine nach mindestens einem der vorangegangenen Ansprüche,
**dadurch gekennzeichnet, dass**
der Polschuh an seiner vom anderen Statorsegment abgewandten Seite eben ausgeführt ist, insbesondere zur Ermöglichung eines möglichst engen und berührenden Aufbau des Stapels der Strangsegmente,
und/oder dass
der zugehörige Verlauf der axialen Breite als Funktion des Radialabstandes aus zwei, nicht zueinander parallelen Abschnitten zusammengesetzt ist, die jeweils eine lineare Funktion des Radialabstandes sind,
insbesondere also der Polrücken aus zwei, nicht zueinander parallelen, ebenen Flächenstücken zusammengesetzt ist.

5. Elektromaschine nach einem der Ansprüche 1 bis 2,
**dadurch gekennzeichnet, dass**
der zugehörige Verlauf der axialen Breite als Funktion des Radialabstandes aus einem bauchigen und/oder konvexen Abschnitt und einem konkaven Abschnitt zusammengesetzt ist, wobei der konkave Abschnitt eine mindestens fünfmal kürzere Bogenlänge aufweist als der andere Abschnitt.

6. Elektromaschine nach mindestens einem der vorangegangenen Ansprüche,
**dadurch gekennzeichnet, dass**
die luftspaltseitige Oberfläche des Polschuhs einen im Wesentlichen gleichgroßen oder höchstens um 20 % unterschiedlichen Flächenwert aufweist im Vergleich zur Übergangsfläche zum Statorsteg hin.

7. Elektromaschine nach mindestens einem der vorangegangenen Ansprüche,
**dadurch gekennzeichnet, dass**
der Polschuh einen Polrücken aufweist,
insbesondere wobei der Polrücken zumindest teilweise zur Statorwicklung und/oder zumindest teilweise zum anderen Statorsegment hin gewandt ist,
wobei der Polrücken die zum Rotor hin zugewandte, luftspaltseitige Fläche des Polschuhs mit dem Statorsteg, insbesondere mit der Statorstegoberfläche, verbindet,
wobei der Polrücken bauchig ausgeführt ist oder aus zwei, nicht zueinander parallelen, ebenen Flächenstücken zusammengesetzt ist,
und/oder dass
der Polschuh derart geformt ist, dass im Wesentlichen kein Teilbereich des Polschuhs in Sättigung geht solange der Oberflächenbereich der luftspaltseitigen, insbesondere also der zum Rotor hin gewandten, Seitenfläche des Polschuhs noch nicht in Sättigung geht,

und/oder dass

der Polschuh eine mit zunehmendem Radialabstand zunehmende Breite in Umfangsrichtung aufweist, insbesondere wobei mit zunehmendem Radialabstand die Zunahme der Breite in Umfangsrichtung im Wesentlichen in dem Maße, insbesondere umgekehrt proportional, verläuft wie die axiale Breite abnimmt.

8. Elektromaschine nach mindestens einem der vorangegangenen Ansprüche,
**dadurch gekennzeichnet, dass**
der Polschuh symmetrisch zu einer Symmetrieebene ausgeformt ist, wobei die Symmetrieebene durch den Schwerpunkt des Polschuhs geht und von der vom Schwerpunkt ausgehenden, radialen Richtung und von der axialen Richtung aufgespannt wird
und/oder dass
der Polschuh symmetrisch zu einer Symmetrieebene ausgeformt ist, wobei die Symmetrieebene durch den Schwerpunkt des Polschuhs geht und die Normalenrichtung Tangentialrichtung am Schwerpunkt ist.

9. Elektromaschine nach mindestens einem der vorangegangenen Ansprüche,
**dadurch gekennzeichnet, dass**
eine Kante des Polschuhs verbreitert ausgeführt ist, insbesondere zur Reduzierung der Gefahr eines Kantenbruchs.

10. Elektromaschine nach mindestens einem der vorangegangenen Ansprüche,
**dadurch gekennzeichnet, dass**
der Stapel in einem Gehäuseteil aufgenommen ist,
insbesondere wobei das Gehäuseteil einen axial verlaufenden Kabelkanal aufweist, insbesondere eine axial verlaufende Vertiefung an seiner dem Stapel zugewandten Fläche, insbesondere Innenfläche.
insbesondere wobei das Gehäuseteil kraftschlüssig mit dem Stapel verbunden ist, insbesondere wobei das Gehäuseteil thermisch aufgeschrumpft oder geklebt.

11. Elektromaschine nach mindestens einem der vorangegangenen Ansprüche,
**dadurch gekennzeichnet, dass**
jedes Statorsegment zwei radial verlaufende, in Umfangsrichtung voneinander mit halbem Polschuhabstand beabstandete Vertiefungen, insbesondere Schlitze, aufweist,
insbesondere so dass beim Zusammenfügen zweier Statorsegmente zu einem Strangsegment die Schlitze in Deckung bringbar sind zur Bildung eines Durchlasses für die Zuleitung und/oder Ableitung der jeweiligen Statorwicklung, und/oder dass
das Statorsegment aus gepresstem oder gesintertem Eisenpulver, insbesondere SMC, gefertigt ist.

12. Verfahren zum Herstellen einer Elektromaschine, nach mindestens einem der vorangegangenen Ansprüche,
**dadurch gekennzeichnet, dass**
die Schlitze bei der Herstellung des Stapels von einer Fertigungsmaschine zum Ausrichten, insbesondere zum Einstellen des relativen Verdrehwinkels, der Strangsegmente zueinander detektiert und/oder verwendet werden.

## Claims

1. Electric machine, in particular a transverse flux machine,
the stator being composed of a stack of a number m of sub-stacks (U, V, W), the sub-stacks (U, V, W) being arranged stacked one on top of the other in the stacking direction,
each sub-stack (U, V, W) being composed of a number k of stator phase winding segments stacked one on top of the other in the stacking direction,
each stator phase winding segment having at least one or at least two stator segments and
a stator winding, in particular an individual winding,
each stator segment having an annular stator web on which pole shoes are formed, which in particular extend radially inwards and/or which extend towards the rotor and/or which are arranged between the rotor and the annular stator web,
the pole shoes in particular being identically moulded,
the orientation of the current in the windings of two stator phase winding segments of a particular sub-stack that are adjacent in the stacking direction being in opposite directions, in particular the winding directions are thus opposite,
each two adjacent stator phase winding segments in the stacking direction having a nonnegligible offset from one another in the circumferential direction,

the offset angle of the stator phase winding segments in the axial direction in particular increasing strictly monotonically or the offset angle of the stator phase winding segments in the axial direction decreasing strictly monotonically, each stator phase winding segment being rotated in the circumferential direction by an offset angle ($\alpha_{U,n}$, $\alpha_{V,n}$, $\alpha_{W,n}$) with respect to the first stator phase winding segment of the first sub-stack, in particular therefore with respect to the axially foremost stator phase winding segment,

the relevant negative offset angle ($-\alpha_{U,n}$, $-\alpha_{V,n}$, $-\alpha_{W,n}$) deviating by less than 3% from the value determined according to

$$\alpha_{U,n} = \frac{1}{p}\left[180° \cdot \left(\frac{(n-1)}{k \cdot m} - f(n)\right)\right]$$

or

$$\alpha_{V,n} = \frac{1}{p}\left[180° \cdot \left(\frac{(n-1)}{k \cdot m} - f(n)\right) + 120°\right]$$

or

$$\alpha_{W,n} = \frac{1}{p}\left[180° \cdot \left(\frac{(n-1)}{k \cdot m} + f(n) - 1\right) + 240°\right],$$

where U, V, W number the sub-stacks sequentially, in particular therefore are assigned to the relevant phase,
where the parameter n numbers the stator phase winding segments of a particular sub-stack (U, V, W) sequentially, and in each case, i.e. for each sub-stack, the values increase from 1 to k,
where n, m, k are natural numbers,
in particular where the parameter m describes the number of phase windings, in particular therefore the number of phases (U, V, W), and is greater than two,
where the parameter k describes the number of stator phase winding segments per sub-stack, in particular therefore per phase,
in particular where m = 3,
where the following applies:

$$f(n) = \begin{cases} 1 & \text{for n even} \\ 0 & \text{for n odd} \end{cases}$$

**characterised in that**
as the radial clearance increases, the area value of the sectional surface of the pole shoe at a first surface deviates from the area value of the pole shoe side face on the air gap side, i.e. the side face facing the rotor, by at least less than 20%,

- the first surface being a tangential plane which has the particular radial clearance from the rotor shaft axis, is oriented in parallel with the rotor shaft axis, has the radial clearance, is oriented perpendicularly to the plane of symmetry and the normal direction of which connects the rotor shaft axis to the centre of gravity of the pole shoe
- or the first face being a cylinder outer surface that has the particular radial clearance from the rotor shaft axis and is oriented in parallel with the rotor shaft axis.

2. Electric machine according to claim 1,
   **characterised in that**
   the number k of stator phase winding segments per sub-stack has the value 2 and/or **in that**
   the pole pair number p, in particular of each stator phase winding segment, is a natural number and has a value between 5 and 21, in particular the value 10,
   and/or **in that**
   the stator phase winding segments directly adjacent in the axial direction, i.e. the stacking direction, contact each other.

3. Electric machine according to at least one of the preceding claims,
   **characterised in that**
   the axial width of the pole shoe decreases as the radial clearance increases,
   the associated shape being positioned between a first and a second shape,
   the first shape being a linear function of the radial clearance, the pole back associated with the first shape being a planar surface,
   the second shape being a circular function, in particular a circular segment function, the pole back associated with the second shape in particular being a cylinder segment surface.

4. Electric machine according to at least one of the preceding claims,
   **characterised in that**
   on its side facing away from the other stator segment, the pole shoe is planar, in particular to allow the stack of phase winding segments to be constructed as tightly as possible and with as much contact as possible,
   and/or **in that**
   the associated shape of the axial width as a function of the radial clearance is composed of two non-parallel segments, each of which is a linear function of the radial clearance,
   in particular therefore the pole back is composed of two non-parallel, planar surface parts.

5. Electric machine according to any of claims 1 to 2,
   **characterised in that**
   the associated shape of the axial width as a function of the radial clearance is composed of a bellied and/or convex segment and a concave segment, the concave segment having an at least five times shorter arc length than the other segment.

6. Electric machine according to at least one of the preceding claims,
   **characterised in that**
   the pole shoe surface on the air gap side has an area value that is substantially equal to or at most 20% different from the transitional surface towards the stator web.

7. Electric machine according to at least one of the preceding claims,
   **characterised in that**
   the pole shoe has a pole back,
   the pole back in particular at least partly facing the stator winding and/or at least partly facing the other stator segment,
   the pole back connecting the air-gap-side pole shoe face, facing the rotor, to the stator web, in particular to the stator web surface,
   the pole back being bellied or being composed of two non-parallel, planar surface parts, and/or **in that**
   the pole shoe is shaped such that substantially no portion of the pole shoe becomes saturated as long as the surface region of the pole shoe side face on the air gap side, i.e. in particular the side face facing the rotor, does not become saturated either,
   and/or **in that**
   the pole shoe has a width in the circumferential direction that increases as the radial clearance increases,
   the increase in the width in the circumferential direction as the radial clearance increases in particular running substantially to the same degree as the decrease in the axial width, in particular reversely proportionally.

8. Electric machine according to at least one of the preceding claims,
   **characterised in that**
   the pole shoe is moulded symmetrically with a plane of symmetry, the plane of symmetry running through the centre of gravity of the pole shoe and being spanned by both the radial direction extending from the centre of gravity and the axial direction,
   and/or **in that**
   the pole shoe is moulded symmetrically with a plane of symmetry, the plane of symmetry running through the centre of gravity of the pole shoe and the normal direction being the tangential direction at the centre of gravity.

9. Electric machine according to at least one of the preceding claims,
   **characterised in that**
   an edge of the pole shoe is configured to be widened, in particular to reduce the risk of an edge breakage.

**10.** Electric machine according to at least one of the preceding claims,
**characterised in that**
the stack is received in a housing part,
the housing part in particular having an axially extending cable duct, in particular an axially extending recess on its face facing the stack, in particular the inner face,
the housing part in particular being frictionally connected to the stack,
the housing part in particular being thermally shrunk on or bonded.

**11.** Electric machine according to at least one of the preceding claims,
**characterised in that**
each stator segment has two radially extending recesses, in particular slots, that are spaced apart from one another in the circumferential direction by half the pole shoe clearance,
in particular such that when two stator segments are joined to form one phase winding segment, the slots can be made congruent so as to form a passage for the supply line and/or connecting cable of the particular stator winding,
and/or **in that**
the stator segment is made of compressed or sintered iron powder, in particular SMC.

**12.** Method for producing an electric machine according to at least one of the preceding claims,
**characterised in that**
when producing the stack, the slots are detected and/or used by a manufacturing machine for orienting the phase winding segments relative to one another, in particular for adjusting the relative angle of rotation thereof.

**Revendications**

**1.** Machine électrique, en particulier machine à flux transversal,
dans laquelle le stator est composé d'un empilement d'un nombre m de sous-empilements (U, V, W), les sous-empilements (U, V, W) étant disposés empilés les uns sur les autres dans une direction d'empilement,
dans laquelle chaque sous-empilement (U, V, W) est composé d'un nombre k de segments de branche de stator empilés les uns sur les autres dans la direction d'empilement,
dans laquelle chaque segment de branche de stator présente au moins un ou au moins deux segments de stator et un enroulement de stator, en particulier un seul enroulement, dans laquelle chaque segment de stator présente une nervure annulaire de stator sur laquelle sont formés des épanouissements polaires qui s'étendent en particulier radialement vers l'intérieur et/ou qui s'étendent vers le rotor et/ou qui sont disposés entre le rotor et la nervure annulaire de stator,
en particulier dans laquelle les épanouissements polaires sont formés de manière similaire,
dans laquelle l'orientation du courant dans les enroulements de deux segments de branche de stator adjacents dans la direction d'empilement d'un sous-empilement respectif est opposée, en particulier donc le sens d'enroulement est opposé,
dans laquelle deux segments de branche de stator adjacents l'un à l'autre dans la direction d'empilement présentent chacun un décalage non nul dans la direction circonférentielle,
en particulier dans laquelle les angles de décalage des segments de branche de stator augmentent de façon strictement monotone dans la direction axiale ou dans laquelle les angles de décalage des segments de branche de stator diminuent de façon strictement monotone dans la direction axiale,
dans laquelle le segment de branche de stator respectif est tourné d'un angle de décalage ($\alpha_{U,n}$ $\alpha_{V,n}$ $\alpha_{W,n}$) dans la direction circonférentielle par rapport au premier segment de branche de stator du premier sous-empilement, en particulier donc par rapport au segment de branche de stator situé le plus en avant axialement,
dans laquelle l'angle de décalage négatif respectif ($-\alpha_{U,n}$ $-\alpha_{V,n}$ $-\alpha_{W,n}$) diffère de moins de 3 % de la valeur déterminée selon

$$\propto_{U,n} = \frac{1}{p}\left[180° \cdot \left(\frac{(n-1)}{k \cdot m} - f(n)\right)\right],$$

respectivement

$$\propto_{V,n} = \frac{1}{p}\left[180° \cdot \left(\frac{(n-1)}{k \cdot m} - f(n) + 120°\right)\right],$$

respectivement

$$\propto_{W,n} = \frac{1}{p}\left[180° \cdot \left(\frac{(n-1)}{k \cdot m} - f(n-1) + 240°\right)\right],$$

dans laquelle U, V, W numérotent successivement les sous-empilements, en particulier donc sont associés à la phase respective,
dans laquelle le paramètre n numérote successivement les segments de branche de stator d'un sous-empilement respectif (U, V, W) et prend dans chaque cas, donc pour chaque sous-empilement, les valeurs de 1 à k,
dans laquelle n, m, k sont des nombres naturels,
en particulier dans laquelle le paramètre m décrit le nombre de branches, en particulier le nombre de phases (U, V, W), et est supérieur à deux,
dans laquelle le paramètre k décrit le nombre de segments de branche de stator par sous-empilement, en particulier donc par phase,
en particulier dans laquelle m = 3,
dans laquelle

$$f(n) = \begin{cases} 1 & pour\ n\ pair \\ 0 & pour\ n\ impair \end{cases},$$

**caractérisée en ce que**,
lorsque la distance radiale augmente, la valeur de surface de la surface de coupe de l'épanouissement polaire avec une première surface diffère d'au moins moins de 20 % de la valeur de surface de la surface latérale de l'épanouissement polaire côté entrefer, donc tournée vers le rotor,

- la première surface étant un plan tangentiel qui présente la distance radiale respective à l'axe de l'arbre de rotor, qui est orienté parallèlement à l'axe de l'arbre de rotor, qui présente la distance radiale, qui est orienté perpendiculairement au plan de symétrie et dont la direction normale relie l'axe de l'arbre de rotor au centre de gravité de l'épanouissement polaire,
- ou la première surface étant une surface d'enveloppe cylindrique qui présente la distance radiale respective à l'axe de l'arbre de rotor et qui est orientée parallèlement à l'axe de l'arbre de rotor.

2. Machine électrique selon la revendication 1,
**caractérisée en ce que**
le nombre k de segments de branche de stator par sous-empilement possède la valeur 2, et/ou que
le nombre de paires de pôles p, en particulier de chaque segment de branche de stator, est un nombre naturel et possède une valeur comprise entre 5 et 21, en particulier la valeur 10,
et/ou que
les segments de branche de stator directement adjacents dans la direction axiale, donc dans la direction d'empilement, se touchent chaque fois.

3. Machine électrique selon au moins l'une des revendications précédentes,
**caractérisée en ce que**
la largeur axiale de l'épanouissement polaire diminue lorsque la distance radiale augmente,
le tracé associé étant disposé entre un premier et un deuxième tracé,
le premier tracé étant une fonction linéaire de la distance radiale, en particulier la face arrière polaire appartenant au premier tracé étant une surface plane,
le deuxième tracé étant une fonction circulaire, en particulier une fonction de section de cercle, en particulier la face arrière polaire appartenant au deuxième tracé étant une surface de section de cylindre.

4. Machine électrique selon au moins l'une des revendications précédentes,
**caractérisée en ce que**

l'épanouissement polaire est réalisé plan sur son côté opposé à l'autre segment de stator, en particulier pour permettre à l'empilement des segments de branche un contact aussi étroit que possible,

et/ou que

le tracé associé de la largeur axiale en fonction de la distance radiale est composé de deux sections non parallèles l'une à l'autre, qui sont chacune une fonction linéaire de la distance radiale,

en particulier donc la face arrière polaire est composée de deux parties de surface planes non parallèles l'une à l'autre.

5. Machine électrique selon l'une des revendications 1 à 2,
   **caractérisée en ce que**
   le tracé associé de la largeur axiale en fonction de la distance radiale est composé d'une section bombée et/ou convexe et d'une section concave, la section concave présentant une longueur d'arc au moins cinq fois plus courte que l'autre section.

6. Machine électrique selon au moins l'une des revendications précédentes,
   **caractérisée en ce que**
   la surface de l'épanouissement polaire côté entrefer présente une valeur de surface qui est sensiblement aussi grande ou qui est différente d'au plus 20 % par rapport à la surface de transition vers la nervure de stator.

7. Machine électrique selon au moins l'une des revendications précédentes,
   **caractérisée en ce que**
   l'épanouissement polaire présente une face arrière polaire,
   en particulier la face arrière polaire étant tournée au moins partiellement vers l'enroulement de stator et/ou au moins partiellement vers l'autre segment de stator,
   la face arrière polaire reliant la surface côté entrefer de l'épanouissement polaire tournée vers le rotor à la nervure de stator, en particulier à la surface de nervure de stator,
   la face arrière polaire étant réalisée bombée ou étant composée de deux parties de surface planes non parallèles l'une à l'autre,
   et/ou que
   l'épanouissement polaire est formé de telle sorte que sensiblement aucune zone partielle de l'épanouissement polaire ne soit saturée tant que la zone de surface de la surface latérale de l'épanouissement polaire côté entrefer, en particulier donc tournée vers le rotor, n'est pas saturée,
   et/ou que
   l'épanouissement polaire présente une largeur dans la direction circonférentielle qui augmente lorsque la distance radiale augmente,
   en particulier l'augmentation de la largeur dans la direction circonférentielle lorsque la distance radiale augmente se faisant sensiblement dans la mesure, en particulier inversement proportionnelle, où la largeur axiale diminue.

8. Machine électrique selon au moins l'une des revendications précédentes,
   **caractérisée en ce que**
   l'épanouissement polaire est formé symétriquement par rapport à un plan de symétrie, le plan de symétrie passant par le centre de gravité de l'épanouissement polaire et étant défini par la direction radiale partant du centre de gravité et par la direction axiale et/ou que
   l'épanouissement polaire est formé symétriquement par rapport à un plan de symétrie, le plan de symétrie passant par le centre de gravité de l'épanouissement polaire et la direction normale étant la direction tangentielle au centre de gravité.

9. Machine électrique selon au moins l'une des revendications précédentes,
   **caractérisée en ce**
   **qu'**un bord de l'épanouissement polaire est réalisé élargi, en particulier pour réduire le risque de rupture de bord.

10. Machine électrique selon au moins l'une des revendications précédentes,
    **caractérisée en ce que**
    l'empilement est logé dans une partie de boîtier,
    en particulier la partie de boîtier présentant un conduit de câbles s'étendant axialement, en particulier un creux s'étendant axialement sur sa surface tournée vers l'empilement, en particulier sa surface intérieure,
    en particulier la partie de boîtier étant reliée à l'empilement par force,
    en particulier la partie de boîtier étant rétractée thermiquement ou collée.

**11.** Machine électrique selon au moins l'une des revendications précédentes,
**caractérisée en ce que**
chaque segment de stator présente deux creux s'étendant radialement, en particulier des fentes qui sont espacées l'une de l'autre dans la direction circonférentielle de la moitié de l'écartement des épanouissements polaires, en particulier de telle sorte que, lorsque deux segments de stator sont assemblés pour former un segment de branche, les fentes puissent être mises en coïncidence pour former un passage pour la ligne d'arrivée et/ou la ligne de départ de l'enroulement de stator respectif
et/ou que
le segment de stator est fabriqué à partir de poudre de fer comprimée ou frittée, en particulier de SMC.

**12.** Procédé de fabrication d'une machine électrique selon au moins l'une des revendications précédentes,
**caractérisé en ce que**
les fentes sont détectées et/ou utilisées lors de la fabrication de l'empilement par une machine de production pour aligner les segments de branche les uns par rapport aux autres, en particulier pour régler leur angle de rotation relatif.

Fig. 1

Fig. 2

Fig. 3

Fig. 4

Fig. 5

Fig. 6

Fig. 7

Fig. 8

90

92

91

70

A +/-20%

45°

45°

A +/-20%

A +/-20%

Fig. 9

Fig. 10

+U  -U  -W  +W  +V  -V

1

20

1

1

20

Fig. 11

Fig. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008098403 A2
- EP 2493054 A1
- EP 1063754 A2
- EP 0334901 A1
- DE 19811073 A1
- EP 1005136 A1
- DE 3705089 A1

**In der Beschreibung aufgeführte Nicht-Patentliteratur**

- Reducing the cogging torque of PM Transverse Flux Machines by discrete skewing of a segmented Stator'' ELECTRICAL MACHINES (ICEM). **DREHER F et al.** 2012 XXTHINTERNATIONAL CONFERENCE ON. IEEE, 02. September 2012, 454-457
- **N. PARSPOUR.** Novel Drive for Use in electrical Vehicle. *2005 IEEE 61TH VEHICULAR TECHNOLOGY CONFERENCE,* 01. Juni 2005, vol. 5, 2930-2933
- Transversalflussmaschine. **H. WEH.** D. Schröder: ''Elektrische Antriebe - Grundlagen, dritte Auflage. Springer, 01. Januar 2007, 391-409